# EUROPEAN PATENT SPECIFICATION

(11) **EP 3 463 732 B1**
(45) Date of publication and mention of the grant of the patent: **31.07.2024**
(21) Application number: 16904206.6
(22) Date of filing: 01.06.2016
(51) Int. Cl.: B23H 9/00, B23H 11/00, B24B 53/00

(54) **RETRUING OF A GRINDING WHEEL USING EDM MACHINE**
NACHWUCHTEN EINER SCHLEIFSCHEIBE MIT EINER FUNKENEROSIONSMASCHINE
RECENTRAGE D'UNE MEULE AU MOYEN D'UNE MACHINE EDM

(30) Priority: 31.05.2016 US 201615168854
(43) Date of publication of application: 10.04.2019
(73) Proprietor: Inland Diamond Products Company, Madison Heights, MI 48071 (US)
(72) Inventor: WIAND, Ronald C., Troy MI 48098 (US)
(74) Representative: Maiwald GmbH
(86) International application number: PCT/US2016/035281
(87) International publication number: WO 2017/209747

(56) References cited:
- JP-A- H05 277 937
- JP-A- S63 283 861
- US-A- 4 332 110
- US-A- 5 045 664
- US-A1- 2002 078 940
- US-A1- 2004 097 167
- US-A1- 2013 217 315

## Description

### FIELD OF THE INVENTION

The present invention relates to retruing of diamond grinding wheels.

### BACKGROUND OF THE INVENTION

Diamond grinding wheels with abrasive grit matrix cutting surfaces sandwiched between outer steel walls are commonly used in glass edging operations. In recent years these wheels have become useful in edging contours in solar energy panels where precision grinding is essential. The cost of solar panels is high due to the value added processes during production. In addition, any quality issues with the edge profile grinding wheels has become more critically problematic than in the past, such as when edge grinding a more decorative surface of a glass table top, automobile lights, window or even an ophthalmic lens.

Because of the quantity of solar panels being produced and the ever increasing cost of diamond grit materials, retruing of out of specification diamond matrix profiling wheels has become an important function in the manufacture of precision ground solar panels and the like.

Past methods or retruing the wheels typically involve using an abrasive grit grinding wheel to remove the outside metal material and rough profile of a grinding wheel and thereafter to re-profile the proper grove or edge cutting pattern into the matrix.

This process has generally been acceptable. However, the wheels resurfaced by this process and the cost of grinding wheels for retruing is problematic.

Related devices and methods are known for example from US 5 045 664 A and JP S63 283861 A. Document US 5 045 664 A discloses the preamble of each independent claim.

Therefore, there remains a need in the art to provide a more precise, cost effective process for retruing of edge profiling grinding wheels which provides superior service capabilities for edge grinding of solar panels and other glass surfaces.

### SUMMARY OF THE INVENTION

The invention provides a process for retruing a profile in an abrasive wheel according to claim 1. A lathe table including an edged cutting tool is provided. A grinding wheel is operably fixtured, the grinding wheel having an outside metal edge and an abrasive matrix surface adjacent thereto for rotation along and axis compatible for lathe removal of material on at least the outside edge of said wheel. A predetermined amount of material along the edge of the grinding wheel is removed with the edged lathe cutting tool. The process further includes providing a rotating electrical discharge profiling tool attached to an electrical discharge machine ("EDM"), for rotating the profiling tool along an axis in a direction to provide electrical discharge profiling of the abrasive matrix surface of the wheel. Then profiling of the wheel by electrical discharge machining of the abrasive matrix surface with a rotating electrode.

The invention provides also a machine according to claim 14, specifically designed for electrical discharge machining of the profile. The machine has parallel rotating axes for simultaneous rotation of a wheel to be trued and an electrode having a profile for retruing of the surface of the wheel. The machine also has a mechanism for contacting of the discharge machine electrode cutting surface and cutting a predetermined profile into the surface. This provides a simpler electrical discharge machine for this purpose which provides a precise electrode surface which can be reformed or touched up without removing and replacing the electrode in the machine.

The process is equally applicable for abrasive wheels with only one side wall being steel. However, explained herein is a process where both sides of the wheel are steel, aluminum, copper, steel, stainless steel or alloys of these with a profiling surface in between.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention, which is defined by the appended claims.

### BRIEF DESCRIPTION OF THE DRAWINGS

The present invention will become more fully understood from the detailed description and the accompanying drawings, wherein:
Figure 1 is a perspective view of a pencil edging wheel of the type retrued in the present invention;
Figure 2 is a detailed perspective view of the wheel of Figure 1 with contour lines showing the contour;
Figure 3 is a side view showing the abrasive surface of the wheel with contour lines showing the abrasive contour of the wheel;

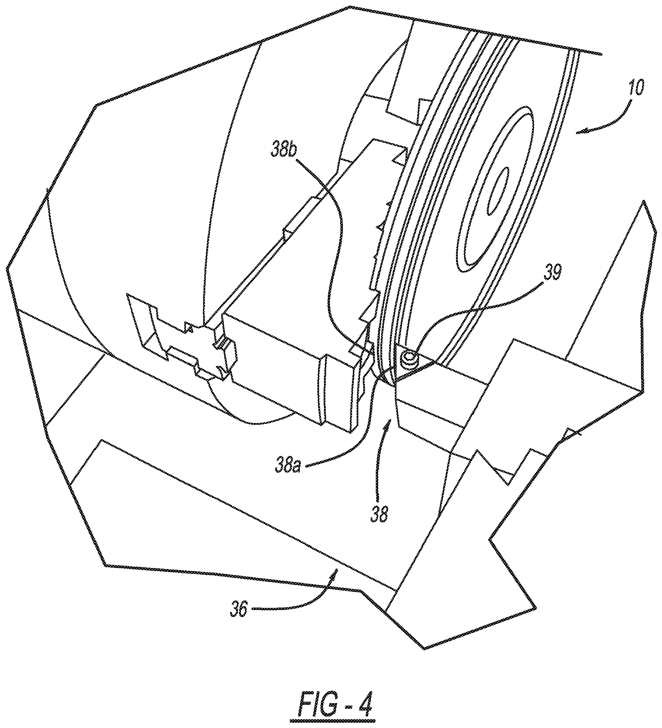

Figure 4 is a detailed sectional view of the wheel of Figure 3;
Figure 5 is a perspective view of the wheel being edge machined on a lathe as a first step of the present process;
Figure 6 is a front perspective view of a wheel getting retrued in accordance with the teachings of the present invention;
Figure 7 is a rear perspective view of the machine which illustrates the profile forming of the electrode;
Figure 8 is a perspective view similar to Figure 7 showing profiling of the graphite electrode;
Figure 9 is a figure showing electrode profiling tool useful in the present invention;
Figure 10 is a side view of another pencil edging wheel of the type retrued in the present invention; and
Figure 11 is a detailed sectional view of the wheel of Figure 10.

### DETAILED DESCRIPTION OF THE PREFERRED EMBODIMENTS

The following description of the preferred embodiment(s) is merely exemplary in nature and is in no way intended to limit the invention, its application, or uses.

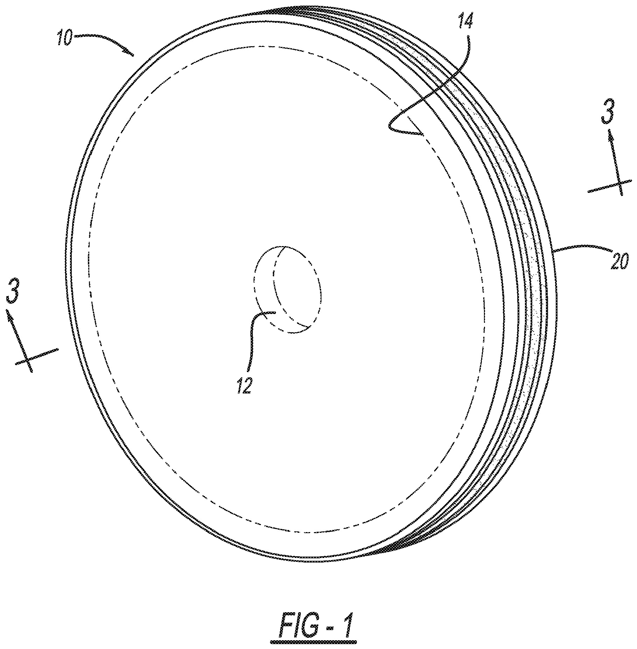

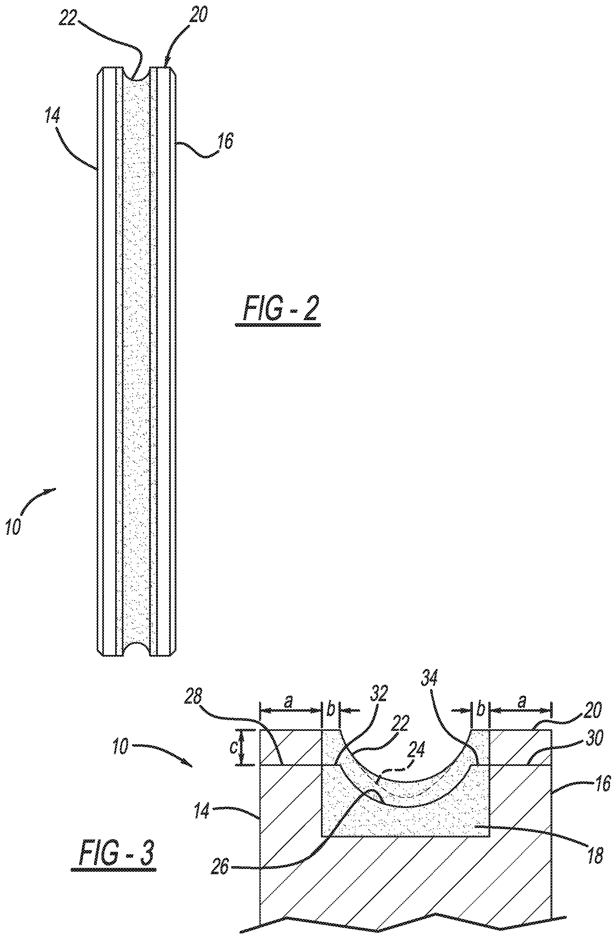

A typical edge profiling wheel is show generally at 10 or "wheel" in Figures 1-3. The wheel includes a central mounting orifice 12 which mounts to an arbor for rotating the wheel about an axis A-A. The wheel 10 has outer sides 14 and 16 which are metal, preferably, steel, and an abrasive matrix material 18 which is a sintered metal abrasive grit matrix at the outer peripheral edge 20 of the wheel 10. At this outer peripheral edge 20 the steel sides 14 and 16 have a thickness "a" and the matrix has a concave working profile section 22 with outer peripheral edges having a thickness "b". During use of the wheel 10 the working surface 22 becomes worn such as to a "V" like surface configuration shown at 24 or otherwise worn. When the wheel 10 becomes worn the working surface 22 must be retrued to the original profile such as that shown at 26. Along with this retruing, the outer peripheral profile is reduced by a distance "c" to form outer steel walls 28 and 30 and abrasive matrix walls 32 and 34 and the profiling surface 26. In the present invention the wheel 10 is retrued using the process as follows.

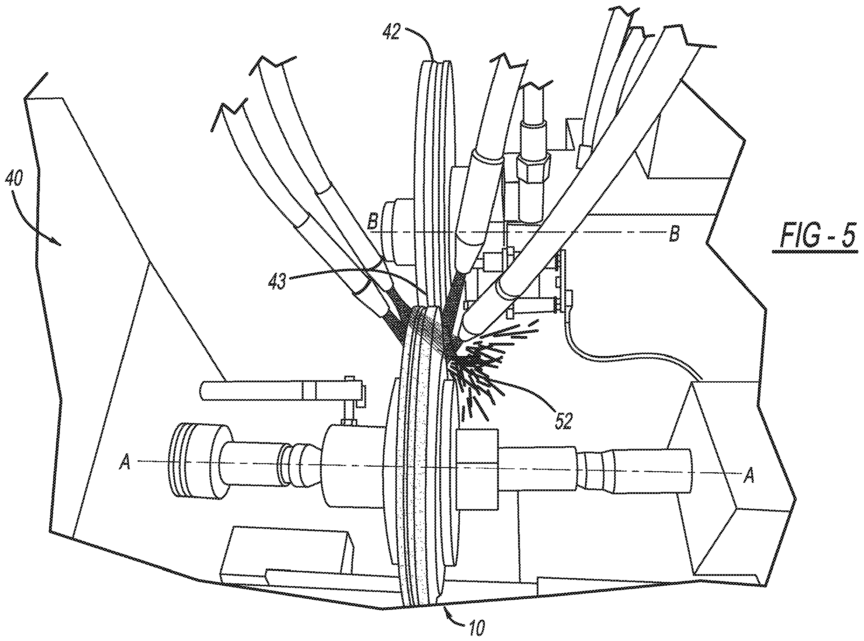

Referring now to Figure 5, a lathe device shown generally at 36 or "lathe table" or "lathe" is provided that is operable to take off the width "a" to a depth "c" steel from the outer sides 14 and 16 of the wheel 10 to form the surfaces 28 and 30. The lathe 36 can be used to take off material from the sides one side at a time or both sides at once from either an axial or longitudinal direction. The steel sides 28 and 30 of the wheel 10 are the only parts which are removed by the lathe process. The lathe process removes the majority of the steel without disturbing the more sensitive matrix 18 material. While it depends on the extent of the wear in the abrasive wheel 10, generally the dimension "c" is from 10 to 100 thousandths of an inch (= 0,254mm to 2,54mm) and typically 50 to 70 thousandths of an inch (= 1 ,27mm to 1,778mm).

The lathe 36 includes at least one edged cutting tool 38 with at least one cutting edge 38a to cut off part of the wheel 10 as the wheel 10 is held by an opposing edge 38b. The cutting edge 38a is operably shaped and located to take off the predetermined depth and dimensions (i.e. , "a" and "c") from the wheel 10 to form the respective one of the surfaces 28 and 30 as the wheel 10 rotates. According to another embodiment, at least two cutting edges 38a and 38b are operably shaped and located to take off the predetermined depth and dimensions (i.e. , "a" and "c") from the wheel 10 to form the both surfaces 28 and 30 at the same time as the wheel 10 rotates. The cutting edge 38a portion is connected by at least one fastener, according to an embodiment of the invention, and is removable to change out for maintenance, repair or when a different cutting surface configuration is desired depending on the application.

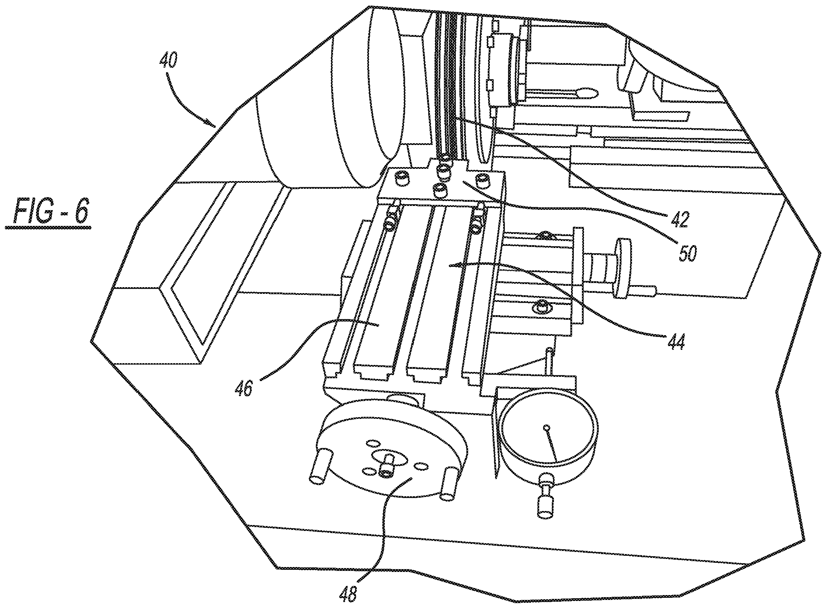

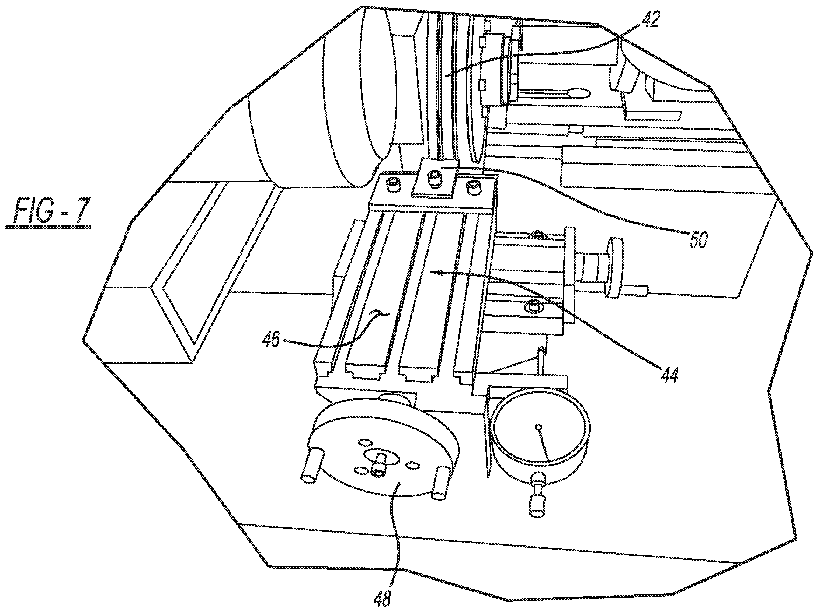

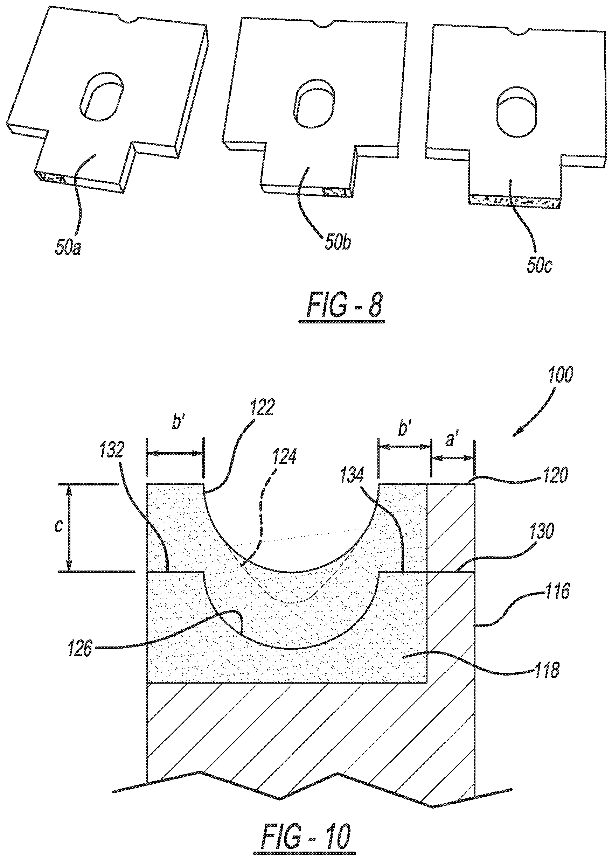

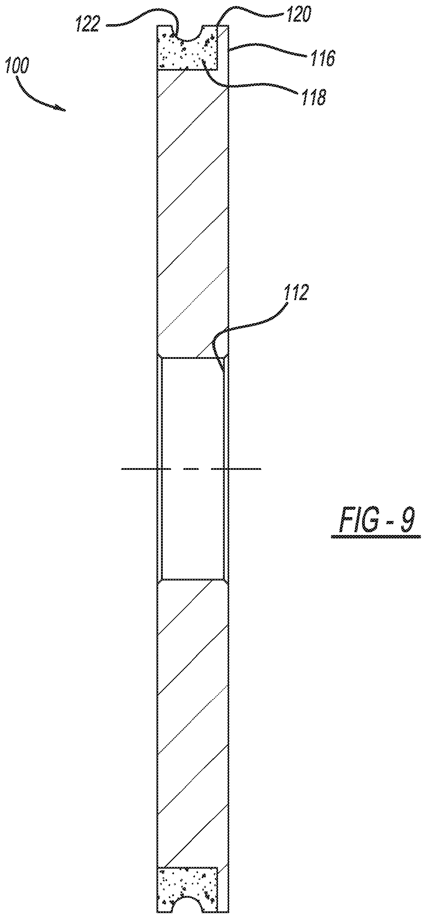

Referring now to Figures 6 and 7, a specialized electric discharge machining apparatus shown generally at 40 or "machine" is provided and includes an electrical discharge profiling tool 42 or "electrode". The electrical discharge machine 40 is configured for controlled rotation along the first axis A-A of the profiling wheel 10 to be retried. The machine 40 is adapted for rotation of the profiled electrode 42 in a parallel axis B-B such that the electrode 42 can be contacted to the wheel 10 to be profiled. Thus, the machine 40 is adjustable for aligning the electrode 42 with the wheel 10 and then moving the electrode 42 toward the wheel 10 while both are turning and the electrical discharge is on to provide machining of the surface. The electrode 42 has an outer circumferential profile shown generally at 43 for contacting the profile to be retrued of the abrasive wheel 10 by electrical discharge machining. In the present invention the apparatus 40 has an electrode reforming apparatus shown generally at 44 in Figures 7 and 8 which is diametrically opposed to the contact point of the electrode 42 with the wheel 10. The electrode reforming apparatus 44 includes at least one table 46 which is moveable by a handle 48 toward and away from the electrode 42. At least one cutting tool mechanism 50 or "cutting tool" is secured to the table 46, e.g., by a plurality of fasteners, and is adapted for selectively contacting and reforming the contour of the electrode 42 by moving the cutting tool 50 into engagement with the electrode 42 to provide a predetermined contour in the electrical machining surface of the electrode 42. Figure 9 illustrates various profiling tools 50a, 50b, 50c which are used depending on the type of wheel being retrued by the electrode 42. It is appreciated that the cutting tool 50 can be positioned in alternative orientations depending on the application such as with the cutter edge upward or angled at 6 degrees.

As will be appreciated by those skilled in the art a graphite electrode 42 is used and is oversized and generally from 8 to 12 inches (=203,2mm to 304,8mm) in diameter. This allows the profile of the electrode 42 to be touched up, re-profiled or even reshaped many times without changing the electrode 42 which is a time consuming process. The electrode 42 can be made of other materials such as copper, steel or alloy materials which are useful as electrodes in EDM machining.

Referring to the figures generally, in accordance with the present invention there is provided a process according to claim 1 for retruing a profile 26 in an abrasive wheel 10 which has the steps of: first providing a lathe table 36 including an edged cutting tool 38. As stated above the cutting tool 38 is used to cut off a portion "c" of the material from the steel side of the wheel 10. The process is equally applicable for cutting wheels with only one side wall being steel (such as shown in Figs. 10-11). The wheel 10 is mounted in the lathe 36 for rotating the wheel 10 and the cutting tool 38 is used to remove material from the steel for a distance "a" inward and a distance "c" downward. This can be done one side at a time or both sides at a time in a radial or axial direction.

Next a rotating electrical discharge profiling electrode 42 is attached along axis B-B parallel to axis A-A and aligned with the outer peripheral edge of the abrasive wheel 10. The wheel 10 is attached to an electrical discharge machine 40, for rotating the profiling tool along an axis in a direction to provide electrical discharge profiling of the abrasive surface of the wheel 10; and, profiling of the wheel 10 by electrical discharge machining of the abrasive surface 18 with the rotating electrode 42 while the wheel 10 prepared by the lathe process is also rotated is then accomplished using standard EDM machining processes to provide a finished retrued abrasive wheel with a new spec profile. EDM coolant 52 is used to remove the swarf generated by the process.

The machine 40 provides adjustment of rotation and current to the electrode 42 and also rotation speed to the abrasive wheel 10. There is also an adjustment for bringing the working surface of the electrode 42 and the working face 18 of the abrasive wheel 10 into contact with one another to provide the proper distance for EDM machining. Thus, the operator must select the proper combination of rotations, gap and current to be used to provide the proper finished profile. A finished profile can typically be achieved in one rotation of the abrasive wheel 10 using the present process. It will be readily appreciated that while the process shows use with a concave abrasive surface any contour and convex surfaces may also be machined using the process of the present invention. Thus, any type of glass cutting wheels normally used in glass for various applications in windows table tops or other uses may be retrued using the process of the present invention.

Another typical edge profiling wheel is shown generally at 100 or "wheel" in Figures 10-11. The wheel 100 is substantially the same as the wheel 10, however, the abrasive matrix material 118 profile is different and there is only one outer wall 116. Any other type of profile style and outer wall configurations, contours and profiles depending on the application are within the scope of the present invention.

The wheel 100 includes a central mounting orifice 112 which is mountable to an arbor for rotating the wheel a 100. The wheel 100 has one outer side 116 which is steel and an abrasive matrix material 118 which is a sintered metal abrasive grit matrix (e.g., sintered diamond matrix) at the outer peripheral edge 120 of the wheel 100. At this outer peripheral edge 120 the steel side 116 has a thickness "a'" and the matrix 118 has a concave working profile section 122 with outer peripheral edges having a thickness "b'". During use of the wheel 100 the working surface 122 becomes worn such as to a "V" like surface configuration shown at 124 or otherwise worn configuration. When the wheel 100 becomes worn the working surface 122 must be retrued to the original profile such as that shown at 126. Along with this retruing, the outer peripheral profile is reduced by a distance "c'" to form outer steel wall 130 and abrasive matrix wall 134 and the profiling surface 126. In the present invention the wheel 100 is retrued using the process as described previously.

## Claims

1. A process for retruing a profile (26) in an electrically conductive abrasive wheel (10) comprising:
providing a lathe table (36) including at least one edged cutting tool (38);
fixturing the wheel (10) having at least one outside metal edge (14, 16) and an abrasive grit matrix (18) adjacent thereto for rotation along a first axis (A-A) compatible for lathe (36) removal of metal material at at least the one outside metal edge (14, 16) of the wheel (10);
removing a predetermined amount of material along the outside metal edge (14, 16) with the at least one edged cutting tool (38);
providing a rotating electrical discharge profiling tool (42) attached to an electrical discharge machine (40), for rotating the electrical discharge profiling tool (42) along a second axis (B-B) parallel to the first axis in a direction to provide electrical discharge profiling of an abrasive surface (22) of the
abrasive grit matrix (18) of the wheel (10); and,
profiling of the wheel (10) by electrical discharge machining of the abrasive surface with the rotating electrical discharge profiling tool;
**characterized in that** the process further comprises:
providing the electrical discharge machine (40) with an electrode reforming apparatus (44) comprising:
a table (46) which is moveable toward and away from the electrical discharge profiling tool (42); and,
at least one cutting tool (50) secured to the table (46) and adapted for selectively contacting and reforming the contour (43) of the electrical discharge profiling tool (42);
selectively moving the table (46) to bring the cutting tool (50) into engagement with the electrical discharge profiling tool (42) for retruing the electrical discharge profiling tool (42) to a predetermined profile prior to machining the profile (26) in the wheel (10).

2. The process for retruing a profile in an abrasive wheel of claim 1, wherein the abrasive wheel (10) is rotated along the axis (A-A) for profiling.

3. The process for retruing a profile in an abrasive wheel of claim 1, wherein the electrical discharge profiling tool (42) is graphite, copper or a mixture of copper and graphite.

4. The process for retruing a profile in an abrasive wheel of claim 1, wherein the electrical discharge profiling tool (42) is formed to a retruing profile (43) prior to machining the profile (26) in the wheel (10).

5. The process for retruing a profile in an abrasive wheel of claim 4, further comprising providing the cutting tool (50) operably mounted at an angle operable for selectively retruing the profile (43) of the electrical discharge profiling tool (42).

6. The process for retruing a profile in an abrasive wheel of claim 1, wherein the wheel (10) has two outside metal edges (14, 16) and a predetermined amount of material (a/c, a/c) along both outside metal edges (14, 16) are removed with the at least one edged cutting tool (38) at the same time.

7. The process for retruing a profile in an abrasive wheel of claim 1, wherein the at least one edged cutting tool (38) removes the outside metal edges (14, 16) one side at a time.

8. The process for retruing a profile in an abrasive wheel of claim 1, further comprising, providing a coolant flow (52) to remove swarf from the electrical discharge profiling tool (42) and wheel (10) generated by the process.

9. The process for retruing a profile in an abrasive wheel of claim 1, wherein the lathe (36) removes 10 to 100 thousandths of an inch (= 0,254mm to 2,54mm) of metal material.

10. The process for retruing a profile in an abrasive wheel of claim 1, wherein the lathe (36) removes 50-70 thousandths of an inch (= 1 ,27mm to 1 ,778mm) of metal material.

11. The process for retruing a profile in an abrasive wheel of claim 1, wherein the abrasive grit (18) is a sintered diamond matrix.

12. The process for retruing a profile in an abrasive wheel of claim 1, wherein the re-profiled surface (26) of the wheel (10) is substantially U-shaped.

13. The process for retruing a profile in an electrically conductive abrasive wheel in accordance with any one of the preceding claims 1-12, further comprising:
profiling of the wheel (10) by electrical discharge machining of the abrasive surface with the rotating electrical discharge profiling tool (42),
wherein the electrical discharge profiling tool (42) and wheel (10) are rotatable along the first axis and parallel second axis in the same or different directions.

14. A machine for retruing of a profile in an abrasive wheel in accordance with any one of the preceding claims 1-13, comprising:
a lathe table (36) including at least one edged cutting tool (38) adapted to remove a predetermined amount of material from an abrasive wheel (10),
an electrical discharge machine (40) configured for controlled rotation of a profiling abrasive wheel (10) to be retrued along a first axis (A-A);
said machine including a spindle adapted for rotation of an electrode (42) in a parallel axis (B-B) to the first axis and said electrode (42) having an outer circumferential profile for contacting the profile to be retrued of the abrasive wheel (10) by electrical discharge machining;
**characterized in that** the apparatus further comprises
a table (46) which is moveable toward and away from the electrical discharge profiling tool (42), and
a cutting tool mechanism (50) secured to the table (46) and adapted for contacting and reforming the contour of the electrode (42) without removing the electrode (42) from its spindle to provide a predetermined contour in the electrical machining surface of the electrode (42) which has zero peripheral runout, and
a table surface to which the cutting tool mechanism (50) is operably mounted wherein the table (46) operably selectively moves the cutting tool mechanism (50) in to/out of engagement with the electrode (42).

## Patentansprüche

1. Ein Verfahren zum Nachschärfen eines Profils (26) einer elektrisch leitfähigen Schleifscheibe (10), umfassend:
Bereitstellen eines Drehtisches (36) beinhaltend wenigstens ein geschärftes Schneidwerkzeug (38);
Einspannen der Scheibe (10), die wenigstens eine äußere Metallkante (14, 16) und eine daran angrenzende Schleifkornmatrix (18) aufweist, zur Drehung entlang einer ersten Achse (A-A), die für das Entfernen von Metallmaterial an wenigstens der einen äußeren Metallkante (14, 16) der Scheibe (10) durch den Drehtisch (36) geeignet ist;
Entfernen einer vorgegebenen Materialmenge entlang der äußeren Metallkante (14, 16) mit dem wenigstens einen geschärften Schneidwerkzeug (38);
Bereitstellen eines rotierenden elektroerosiven Profilierungswerkzeugs (42), das an einer elektrischen Erosionsmaschine (40) angebracht ist, um das elektroerosive Profilierungswerkzeug (42) entlang einer zweiten Achse (B-B), die parallel zur ersten Achse ist, in eine Richtung zu drehen, um eine elektroerosive Profilierung einer Schleifoberfläche (22) der Schleifkornmatrix (18) der Scheibe (10) zu erreichen; und,
Profilieren der Scheibe (10) durch elektroerosive Bearbeitung der Schleifoberfläche mit dem rotierenden elektroerosiven Profilierungswerkzeug;
**dadurch gekennzeichnet, dass** das Verfahren weiterhin Folgendes umfasst:
Versehen der elektrischen Erosionsmaschine (40) mit einer Vorrichtung (44) zum Neuformen von Elektroden, die Folgendes umfasst:
einen Tisch (46), der auf das elektroerosive Profilierungswerkzeug (42) zu und von diesem weg bewegbar ist; und,
wenigstens ein Schneidwerkzeug (50), das an dem Tisch (46) befestigt ist und zum selektiven Kontaktieren und Neuformen der Kontur (43) des elektroerosiven Profilierungswerkzeugs (42) ausgestaltet ist;
selektives Bewegen des Tisches (46), um das Schneidwerkzeug (50) mit dem elektroerosiven Profilierungswerkzeug (42) in Eingriff zu bringen, um das elektroerosive Profilierungswerkzeug (42) vor dem Bearbeiten des Profils (26) der Scheibe (10) auf ein vorbestimmtes Profil nachzuschärfen.

2. Das Verfahren zum Nachschärfen eines Profils einer Schleifscheibe nach Anspruch 1, wobei die Schleifscheibe (10) zum Profilieren entlang der Achse (A-A) gedreht wird.

3. Das Verfahren zum Nachschärfen eines Profils einer Schleifscheibe nach Anspruch 1, wobei das elektroerosive Profilierungswerkzeug (42) aus Graphit, Kupfer oder einer Mischung aus Kupfer und Graphit besteht.

4. Das Verfahren zum Nachschärfen eines Profils einer Schleifscheibe nach Anspruch 1, wobei das elektroerosive Profilierungswerkzeug (42) vor dem Bearbeiten des Profils (26) der Scheibe (10) zu einem Nachschärfeprofil (43) geformt wird.

5. Das Verfahren zum Nachschärfen eines Profils einer Schleifscheibe nach Anspruch 4, ferner umfassend das Bereitstellen des Schneidwerkzeugs (50), das betriebsbereit in einem Winkel montiert ist, der zum selektiven Nachschärfen des Profils (43) des elektroerosiven Profilierungswerkzeugs (42) geeignet ist.

6. Das Verfahren zum Nachschärfen eines Profils einer Schleifscheibe nach Anspruch 1, wobei die Scheibe (10) zwei äußere Metallkanten (14, 16) aufweist und eine vorgegebene Materialmenge (a/c, a/c) entlang beider äußerer Metallkanten (14, 16) mit dem wenigstens einen geschärften Schneidwerkzeug (38) gleichzeitig entfernt wird.

7. Das Verfahren zum Nachschärfen eines Profils einer Schleifscheibe nach Anspruch 1, wobei das wenigstens eine geschärfte Schneidwerkzeug (38) eine Seite der äußeren Metallkanten (14, 16) nach der anderen entfernt.

8. Das Verfahren zum Nachschärfen eines Profils einer Schleifscheibe nach Anspruch 1, ferner umfassend das Bereitstellen eines Kühlmittelstroms (52) zum Entfernen von durch das Verfahren erzeugten Schleifstaub von dem elektroerosiven Profilierungswerkzeug (42) und der Scheibe (10).

9. Das Verfahren zum Nachschärfen eines Profils einer Schleifscheibe nach Anspruch 1, wobei der Drehtisch (36) 10 bis 100 Tausendstel Zoll (= 0,254mm bis 2,54mm) an metallischem Material entfernt.

10. Das Verfahren zum Nachschärfen eines Profils einer Schleifscheibe nach Anspruch 1, wobei der Drehtisch (36) 50 bis 70 Tausendstel Zoll (= 1,27mm bis 1,778mm) an metallischem Material entfernt.

11. Das Verfahren zum Nachschärfen eines Profils einer Schleifscheibe nach Anspruch 1, wobei die Schleifkörner (18) eine gesinterte Diamantmatrix sind.

12. Das Verfahren zum Nachschärfen eines Profils einer Schleifscheibe nach Anspruch 1, wobei die nachprofilierte Oberfläche (26) der Scheibe (10) im Wesentlichen U-förmig ist.

13. Das Verfahren zum Nachschärfen eines Profils einer elektrisch leitfähigen Schleifscheibe nach einem der Ansprüche 1-12, ferner umfassend:
Profilieren der Scheibe (10) durch elektroerosive Bearbeitung der Schleifoberfläche mit dem rotierenden elektroerosiven Profilierungswerkzeug (42),
wobei das elektroerosive Profilierungswerkzeug (42) und die Scheibe (10) entlang der ersten Achse und der parallelen zweiten Achse in die gleiche oder in unterschiedliche Richtungen drehbar sind.

14. Eine Maschine zum Nachschärfen eines Profils einer Schleifscheibe nach einem der Ansprüche 1-13, umfassend:
einen Drehtisch (36) beinhaltend wenigstens ein geschärftes Schneidwerkzeug (38), das dazu ausgelegt ist, eine vorgegebene Materialmenge von einer Schleifscheibe (10) zu entfernen,
eine elektrische Erosionsmaschine (40), die für eine kontrollierte Rotation einer nachzuschärfenden Profilierungs-Schleifscheibe (10) entlang einer ersten Achse (A-A) ausgelegt ist;
wobei die Maschine eine Spindel beinhaltet, die für eine Drehung einer Elektrode (42) in einer parallelen Achse (B-B) zur ersten Achse ausgelegt ist, und wobei die Elektrode (42) ein äußeres Umfangsprofil zum Kontaktieren des durch elektroerosive Bearbeitung nachzuschärfenden Profils der Schleifscheibe (10) aufweist;
**dadurch gekennzeichnet, dass** die Maschine ferner Folgendes umfasst
einen Tisch (46), der auf das elektroerosive Profilierungswerkzeug (42) zu und von diesem weg bewegbar ist, und
einen Schneidwerkzeugmechanismus (50), der an dem Tisch (46) befestigt ist und zum Kontaktieren und Neuformen der Kontur der Elektrode (42) geeignet ist, ohne die Elektrode (42) von ihrer Spindel zu entfernen, um eine vorbestimmte Kontur in der elektrischen Bearbeitungsoberfläche der Elektrode (42) zu erreichen, die keinerlei Umfangsrundlaufabweichung aufweist, und
eine Tischoberfläche, an der der Schneidwerkzeugmechanismus (50) betriebsbereit montiert ist, wobei der Tisch (46) den Schneidwerkzeugmechanismus (50) im Betrieb selektiv in/außer Eingriff mit der Elektrode (42) bringt.

## Revendications

1. Procédé pour recentrer un profil (26) dans une meule abrasive électriquement conductrice (10) comprenant de :
fournir une table de tour (36) comportant au moins un outil de coupe à arêtes (38) ;
fixer la meule (10) ayant au moins un bord métallique extérieur (14, 16) et une matrice de grains abrasifs (18) adjacente à celui-ci en vue d'une rotation le long d'un premier axe (A-A) compatible pour un enlèvement de matière métallique du tour (36) au niveau du au moins un bord métallique extérieur (14, 16) de la meule (10) ;
enlever une quantité prédéterminée de matière le long du bord métallique extérieur (14, 16) avec le au moins un outil de coupe à arêtes (38) ;
fournir un outil rotatif de profilage par électro-érosion (42) fixé à une machine d'électro-érosion (40), pour faire tourner l'outil de profilage par électro-érosion (42) le long d'un second axe (B-B) parallèle au premier axe dans une direction afin de profiler par électro-érosion une surface abrasive (22) de la matrice de grains abrasifs (18) de la meule (10) ; et
profiler la meule (10) par usinage par électro-érosion de la surface abrasive avec l'outil rotatif de profilage par électro-érosion ;
**caractérisé en ce que** le procédé comprend en outre de :
fournir la machine d'électro-érosion (40) avec un appareil de reformage d'électrode (44) comprenant :
une table (46) qui peut se rapprocher et s'éloigner de l'outil de profilage par électro-érosion (42) ; et
au moins un outil de coupe (50) fixé à la table (46) et adapté pour être sélectivement en contact avec le contour (43) de l'outil de profilage par électro-érosion (42) et reformer celui-ci ;
déplacer sélectivement la table (46) pour mettre l'outil de coupe (50) en prise avec l'outil de profilage par électro-érosion (42) pour recentrer l'outil de profilage par électro-érosion (42) à un profil prédéterminé avant d'usiner le profil (26) dans la meule (10).

2. Procédé pour recentrer un profil dans une meule abrasive selon la revendication 1, dans lequel la meule abrasive (10) tourne le long de l'axe (A-A) pour un profilage.

3. Procédé pour recentrer un profil dans une meule abrasive selon la revendication 1, dans lequel l'outil de profilage par électro-érosion (42) est du graphite, du cuivre ou un mélange de cuivre et de graphite.

4. Procédé pour recentrer un profil dans une meule abrasive selon la revendication 1, dans lequel l'outil de profilage par électro-érosion (42) est formé en un profil de recentrage (43) avant d'usiner le profil (26) dans la meule (10) .

5. Procédé pour recentrer un profil dans une meule abrasive selon la revendication 4, comprenant en outre de fournir l'outil de coupe (50) monté de manière opérationnelle à un angle opérationnel pour recentrer sélectivement le profil (43) de l'outil de profilage par électro-érosion (42).

6. Procédé pour recentrer un profil dans une meule abrasive selon la revendication 1, dans lequel la meule (10) a deux bords métalliques extérieurs (14, 16) et une quantité prédéterminée de matière (a/c, a/c) le long des deux bords métalliques extérieurs (14, 16) est enlevée simultanément avec le au moins un outil de coupe à arêtes (38).

7. Procédé pour recentrer un profil dans une meule abrasive selon la revendication 1, dans lequel le au moins un outil de coupe à arêtes (38) enlève les bords métalliques extérieurs (14, 16) d'un côté à la fois.

8. Procédé pour recentrer un profil dans une meule abrasive selon la revendication 1, comprenant en outre de fournir un écoulement de fluide de refroidissement (52) pour enlever les copeaux de l'outil de profilage par électro-érosion (42) et de la meule (10) générés par le procédé.

9. Procédé pour recentrer un profil dans une meule abrasive selon la revendication 1, dans lequel le tour (36) enlève 10 à 100 millièmes de pouce (= 0,254 mm à 2,54 mm) de matière métallique.

10. Procédé pour recentrer un profil dans une meule abrasive selon la revendication 1, dans lequel le tour (36) enlève 50 à 70 millièmes de pouce (= 1,27 mm à 1,778 mm) de matière métallique.

11. Procédé pour recentrer un profil dans une meule abrasive selon la revendication 1, dans lequel le grain abrasif (18) est une matrice de diamant fritté.

12. Procédé pour recentrer un profil dans une meule abrasive selon la revendication 1, dans lequel la surface reprofilée (26) de la meule (10) est sensiblement en forme de U.

13. Procédé pour recentrer un profil dans une meule abrasive électriquement conductrice selon l'une quelconque des revendications 1 à 12 précédentes, comprenant en outre de :
profiler la meule (10) par un usinage par électro-érosion de la surface abrasive avec l'outil rotatif de profilage par électro-érosion (42),
dans lequel l'outil de profilage par électro-érosion (42) et la meule (10) peuvent tourner le long du premier axe et parallèlement au second axe dans le même sens ou dans des sens différents.

14. Machine pour recentrer un profil dans une meule abrasive selon l'une quelconque des revendications 1 à 13 précédentes, comprenant :
une table de tour (36) comportant au moins un outil de coupe à arêtes (38) adapté pour enlever une quantité prédéterminée de matière d'une meule abrasive (10),
une machine d'électro-érosion (40) configurée pour une rotation commandée d'une meule abrasive de profilage (10) à recentrer le long d'un premier axe (A-A) ;
ladite machine comportant une broche adaptée pour la rotation d'une électrode (42) selon un axe (B-B) parallèle au premier axe et ladite électrode (42) ayant un profil circonférentiel extérieur pour entrer en contact avec le profil à recentrer de la meule abrasive (10) par un usinage par électro-érosion ;
**caractérisée en ce que** l'appareil comprend en outre une table (46) qui peut se rapprocher et s'éloigner de l'outil de profilage par électro-érosion (42), et
un mécanisme d'outil de coupe (50) fixé à la table (46) et adapté pour entrer en contact avec le contour de l'électrode (42) et recentrer celui-ci sans retirer l'électrode (42) de sa broche pour fournir un contour prédéterminé dans la surface d'électro-érosion de l'électrode (42) qui a un faux-rond périphérique nul, et
une surface de table sur laquelle le mécanisme d'outil de coupe (50) est monté de manière opérationnelle, dans laquelle la table (46) déplace sélectivement le mécanisme d'outil de coupe (50) de manière opérationnelle pour venire en prise avec/hors prise de l'électrode (42).
